Europäisches Patentamt

European Patent Office

Office européen des brevets

(19)

(11) Publication number: **0 212 020**
**B1**

(12) **EUROPEAN PATENT SPECIFICATION**

(45) Date of publication of the patent specification:
28.03.90

(51) Int. Cl.⁴: **G06K 19/06**

(21) Application number: 85305858.4

(22) Date of filing: 16.08.85

(54) Data processing card system and method of forming same.

(43) Date of publication of application:
04.03.87 Bulletin 87/10

(45) Publication of the grant of the patent:
28.03.90 Bulletin 90/13

(84) Designated Contracting States:
AT BE CH DE FR GB IT LI LU NL SE

(56) References cited:
EP-A- 0 029 785
EP-A- 0 072 759
FR-A- 2 359 464
FR-A- 2 513 411
GB-A- 2 081 950

ELECTRONIQUE INDUSTRIELLE, no. 15, 1st May 1981,
pages 87-88, Paris, FR; "Carte de paiement
électronique: la version du LEP"

(73) Proprietor: HORIZON TECHNOLOGIES INC., 10114 Cape
Ann Drive, Columbia Maryland 21046(US)

(72) Inventor: Poetker, John J., 10114 Cape Ann Drive,
Columbia Maryland 21046(US)
Inventor: Poetker, Peter, 10967 Trotting Ridge Way,
Columbia Maryland 21044(US)

(74) Representative: Lambert, Hugh Richmond et al, D.
YOUNG & CO. 10 Staple Inn, London, WC1V 7RD(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention pertains to data processing card systems and a method of forming such a system.

In some prior art data processing systems, such as that shown in U.S Patent No. 4 295 041, there is provided a portable data carrier including a microprocessor. However, that system provides only read only memory circuitry and such does not direct itself to electrically alterable program read only memory systems. Additionally, that system is not able to function as a standard type credit card housing sufficient circuitry to provide for an overall data processing system, as is provided by the present invention.

In other prior art systems such as that shown in U.S. Patent No. 4 211 919, there is provided a portable data carrier which also includes microprocessing systems. However, in that system also the dense packaging of logic circuitry cannot be accomplished within geometrical constraints of a credit card type holder or carrier.

It is, however, known to provide data processing systems in the form of a credit card. For example, in EP-A 072 759 there is disclosed an automatic transaction card incorporating an electronic module accommodated in a cavity hollowed out in the card, and which module comprises a ceramic base plate on one surface of which is formed a bulky interconnection superstructure using a technique employing a thick layer of fibres. Openings are fashioned in a base plate to receive the chips of integrated circuits connected at the edge of these openings to blocks disposed below the level of the superstructure by means of flat linkages. The blocks are in turn connected to external access blocks in the superstructure. The upper surface of the chips and the flat linkage connections are encased by a protective layer, the whole module not exceeding 600 microns in thickness and 12 × 15mm in size when flat.

An alternative construction is disclosed by Laboratoires d'Electronique et de Physique Appliquée (LEP) in "Electronique Industrielle" May 1981, No. 15, pp. 87–88. In this case an integrated circuit payments card is described. The central core of the card is a PVC sheet having apertures therein which accommodate the circuit chip device of the integrated circuit. The circuit chip devices are premounted on a two-sided circuit sheet created on opposite sides of a polymide film and which is superimposed on the PVC core. A third sheet carrying a magnetic track is placed on the opposite face of the core, and the whole is encapsulated, possibly after mounting a photograph and signature of the card holder on the card, between further layers of PVC.

In contrast to the foregoing, the present invention discloses a credit card type data processing system which is of an easily assembled, simplified laminated structure.

In accordance with this invention a data processing system is provided in the form of a laminated card comprising laminated support structure sealed between two outer surface layers and supporting therebetween one or more circuit chip device(s) and at least one predetermined electrical lead pattern in spaced relation one above the other and coupled electrically one to the other, said laminated support structure comprising a thermally conductive carrier layer upon which is superimposed a support layer of electrically insulating material and upon which are mounted said one or more circuit chip device(s), wherein the laminated support structure comprises, as said thermally conductive carrier layer, a layer of rigid electrically insulating, thermally conductive material carrying on its surface said at least one predetermined lead pattern, and, as said support layer, a flexible film of electrically insulating material upon which are mounted said circuit chip devices in spaced relation to the lead pattern(s) on the carrier layer and which are electrically coupled one to the other across the interface between the rigid carrier and superimposed flexible support layers.

The invention is further described with reference to the accompanying drawings, in which:

FIG. 1 is a perspective view of the data processing card system;

FIG. 2 is a perspective, exploded and partially cut-away view of the data processing card system showing the substrate carrier member and the flexible carrier member sandwiched between opposing isolating plastic layer members;

FIG. 3 is a sectional view of the data processing card system taken along the section line 3-3 of FIG. 1;

FIG. 4 is a perspective, and exploded view of an embodiment of the data processing card system showing a substrate carrier member sandwiched between first and second flexible carrier members each having a plurality of circuit chip devices mounted thereon for electrical interaction with lead patterns formed on opposing surfaces of the substrate carrier member;

FIG. 5 is a perspective view of the second flexible carrier member showing the surface having circuit chip devices mounted thereon;

FIG. 6 is a perspective and exploded view of a portion of the first or second carrier members and the positional alignment of the circuit chip thereon;

FIG. 7 is a sectional view of the first or second flexible film carrier members taken along the section lines 7-7 of FIG. 6;

FIG. 8 is a perspective view of a chip coupling flexible carrier member; and,

FIG. 9 is a sectional view of an embodiment of the data processing card system showing an extended substrate carrier member.

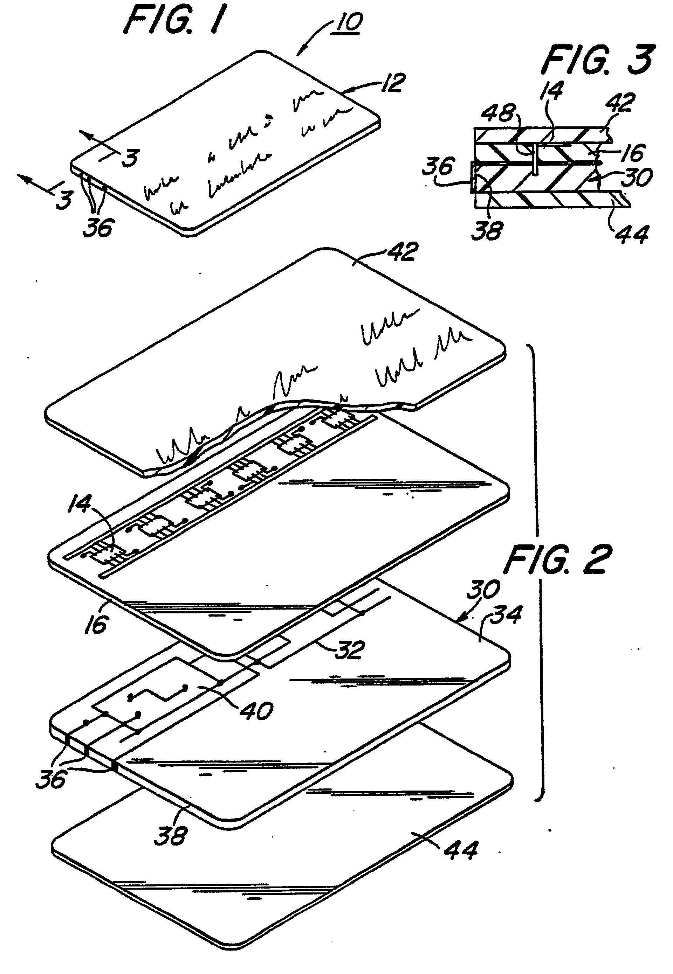

Referring now to FIGS. 1-3, there is shown a data processing card system 10 which provides for an electronic logic circuit packaging technique to produce the overall data processing card system 10 in an encapsulated manner within a substantially hermetically sealed housing which takes on the overall geometrical contour of card member 12.

As seen in FIG. 1, data processing card system 10 is encapsulated and packaged into a thin housing in the form of card member 12 or another type planar member. As will be seen in following paragraphs, data processing card system 10 as provided in the overall packaging technique and structure as herein described, is substantially hermetically sealed with respect to the external environment in order that data processing system 10 may be used in a wide variety of external environments, some of which may be deleterious to the logic circuitry contained therein.

In overall concept, data processing system 10 provides for a plurality of logic chip circuits in a thin, miniaturized packaging scheme which provides for substantially hermetic sealing of the chip electronic circuitry in a dense packaging concept. Integrated circuit chips 14, shown in FIG. 2, are well known in the art and may be logic circuit chips, chip memory devices, and/or combinations thereof. Circuit chip devices 14 may be of the electrically erasable programmable read-only memory type such as that commercially produced by INTEL Corp. having a designation number 2816. This type of chip memory device 14 is operable from a 5.0 volt power supply in the read mode and the write/erase modes are accomplished by providing a voltage pulse approximating 21.0 volts. The electrical erase/write capability of the INTEL model number 2816 memory chip device 14 allows for a variety of applications requiring nonvolatile erase and write modes.

In the embodiments shown in FIGS. 1-3, data processing system 10 includes a plurality of circuit chip devices 14 coupled to a mechanism for mounting chip devices 14 within data processing system 10. Circuit chip devices 14 are mounted onto first flexible film carrier 16 through use of one of a number of well known techniques. One technique of mounting chips 14 to first flexible film carrier 16 is clearly shown and described in U.S. Patent #3,689,991 with an apparent improvement shown and described in U.S. Patent #4,380,042. Chip devices 14 are lead bonded to first flexible film carrier 16 which includes a unique circuit design to allow circuit chips 14 to be interconnected into an overall data processing system 10.

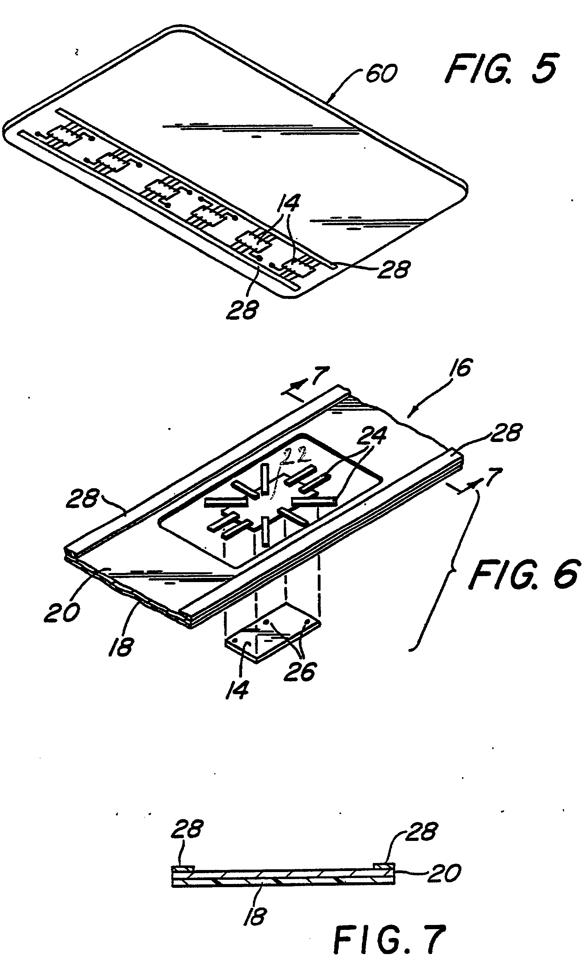

Referring now to FIGS. 6 and 7, there is shown the mounting mechanism and structure for circuit chips 14. As can be seen in FIG. 6, in partial cutaway and perspective view, first flexible film carrier 16 is shown with one chip device 14 removed therefrom for clarity purposes. As shown in FIG. 6, chip device 14 is alignable with a lower portion of first flexible film carrier 16, however, chip device 14 may be mounted on a top surface as is well known in the art.

Flexible film carrier 16 includes electrically insulating tape 18 which is electrically insulated and a thin foil strip or layer member 20 which is electrically conducting and secured to insulating layer 18 by adhesive lamination or some like technique, not important to the overall concept.

FIGS. 6 and 7 are exaggerated in thickness for clarity of visual observation, however, the overall thickness of insulating and conductive layers 18 and 20 in combination may be within the approximating dimensional thickness range of 0.005 to 0.01 inches (0.13 to 0.25 mm) with an overall preferred dimensional thickness of first flexible film carrier member 16 approximating 0.0075 inches (0.19 mm).

Electrically conducting layer 20 may be a thickness in the approximating range of 0.0001 to 0.0005 inches (2.5 to 12.7 µm). Additionally, in order to provide a quantitative dimension to overall first flexible film carrier 16, chip circuit devices 14 of the type herein described may include a dimensional thickness within the approximating range of 0.01 to 0.04 inches (0.25 to 1 mm) with a preferred dimensional thickness approximating 0.02 inches (0.5 mm). First flexible film carrier member 16 is of the type shown and described in U.S. Patent No. 3,689,991 and No. 4,380,042.

Apertures 22 extend through first flexible film carrier 16 and are aligned with logic chip device 14 for insert therein. As shown in FIG. 6, portions of electrically conducting layer 20 may be removed from overall flexible film carrier 16 to form a plurality of metallic or conducting leads 24 for contacting predetermined active regions 26 of circuit chip device 14. Removal of electrically conducting layer member 20 in a predetermined pattern may be accomplished by photolithographic masking and etching, or other well known techniques in the art. Subsequent to removal of predetermined portions of electrically conductive foil layer 20, lead members 24 are formed and extend internal to aperture 22 to provide for contact bonding of chip devices 14 to electrical lead members 24.

In the manufacturing process for first flexible film carrier member 16 having a plurality of chip devices 14 adhered thereto, a strip of insulating tape layer 18 in combination with electrically conducting layer 20 is initially provided. Central aperture 22 passing through layers 18 and 20 locate the inner portion of metallic lead members 24 which are formed by etching away predetermined portions of electrically conductive layer 20 external to the predetermined geometrical configuration of leads 24.

The inner end portions of metallic leads 24 extend in a generally radial outward direction from the central portion of aperture 22 as shown in FIG. 6. The inner end portions of leads 24 terminate internal to aperture 22 and terminate in registry or alignment with contact regions 26 of chip devices 14. Logic chip devices 14 may then be placed in alignment with aperture 22 and the inner ends of leads 24 are secured to chip devices 14 at contact regions 26.

Prior to logic or memory chip devices 14 being coupled to leads 24, first flexible film carrier member 16 may be unwound from a reel, as is known in the art, and leads 24 formed thereon through appropriate pattern etching techniques. First flexible film carrier 16 may then be immersed in a tin plating solution to plate the exposed portions of lead 24 with a solderable metal. Thus, both sides of the exposed portions of leads 24 within aperture 22 are tin coated.

Semi-conductor devices 14 may then be bonded to leads 24 by application of an electrical conductor wherein logic and/or memory devices 14 may include metallic contacts attached to electrically active regions 26. To effect the bonding of the contacts to the leads 24, the tin plated leads 24 are pressed against the contacts by a displacement of a heatable bonding tip system which is well known in the art. Bonding may then be achieved by applying electrical resistance heating current to the tip and such is raised to a sufficiently high temperature to cause the tin plated leads 24 to be bonded to the gold contacts of the contact regions 26.

Additionally, in order to couple a plurality of chip devices 14 in consecutive manner on first flexible film carrier 16, there is provided metallic buss bar foil member 28, as is shown in FIGS. 1 and 6, to which chip devices 14 are electrically coupled. In this manner, a plurality of chip devices 14 may be coupled each to the other, dependent upon a particular circuit design requirement, not part of the subject invention concept.

Data processing card system 10 as herein described replaces a standard printed circuitboard using generally photo-etched copper circuit patterns with flexible film carriers which interconnect logic and/or memory chips 14 into a singular operating data processing card system 10. A plurality of chip devices 14 mounted on consecutive frames of first film carrier 16 provide for a total system pattern which is repeated on first film carrier member 16 in a manner such that overall data processing system 10 may be easily bonded as well as tested.

Substrate carrier member 30 of data processing system 10 is formed as part of the overall logic circuitry to carry parallel bussing for each chip device 14. Additionally, substrate carrier member 30 may be used to interconnect chip circuits dependent upon the particular logic involved. Further, substrate carrier member 30 is generally formed of a substantially rigid type composition to provide a mechanical support for first flexible film carrier 16 and associated circuit chips 14 and finally is used as a heat dissipation device for data processing system 10 during the operational mode. Thus, substrate carrier member 30 in addition to heat dissipation uses, provides for an electrical interconnection system to couple circuit chip 14 into an overall operating data processing system 10 and is interrelated and a part of the electrical design concept.

In order to provide for an electrically insulative material composition in combination with a thermally conductive composition, substrate carrier member 30 may be formed of ceramic, Kovar, or some like material which will aid in the heat dissipation of system 10 during operation while simultaneously maintaining a substantially electrically insulative barrier. Additionally, such materials also give some rigidity to system 10 which is important since it is understood that film carrier 16 is extremely flexible in structural rigidity and overall card system 10 must be of sufficient rigidity to allow operational use in a number of user environments.

As can be clearly seen in FIG. 2, substrate carrier leads 32 are formed into an overall first predetermined electrical lead pattern 40 formed on upper or top surface 34 of substrate carrier member 30. First substrate electrical pattern 40 may be formed through photo-resist etching or some like technique not important to the inventive concept as herein described. The overall pattern of electrical substrate carrier leads 32 match the circuit pattern required to interconnect the address data busses of circuit chip devices 14 into an overall operating system.

As can be seen in FIGS. 2 and 3, a plurality of substrate carrier leads 32 of first substrate electrical pattern 40 may expand to substrate carrier edge face 38 where such terminate in electrically connective pin members 36. Electrically connective pin members 36 mounted on edge face 38 provide for the electrical coupling of data processing system 10 to an external terminal device not part of the subject invention concept.

As seen in FIG. 3, chip pin members 48 are used to couple predetermined substrate carrier leads 32 within the overall first predetermined electrical lead pattern 40 as well as to individual circuit chips 14. Chip pin member 48 may be electrically coupled to predetermined electrical lead members 24 on one end thereof and extend into electrical contact with predetermined substrate carrier leads 32 as is necessitated by the particular design logic. It is to be understood that chip pin members 48 may be discrete chip pin members or may simply be extensions of foil electrical lead members 24 which are directed in a downward manner through first flexible film carrier 16 into contact with predetermined substrate carrier leads 32. The manner and mode of particularly coupling circuit chips 14 to first predetermined electrical lead pattern 40 may be through a number of techniques with the use of chip pin members 48 being shown and described for illustrative purposes.

Still referring to the embodiment of data processing card system 10 as shown in FIGS. 1-3, there is further provided a mechanism for substantially isolating substrate carrier member 30 and first flexible film carrier 16 from an external environment. Referring to FIGS. 2 and 3, the isolating mechanism includes a pair of substantially planar layer members 42 and 44 which are coupled to combined substrate carrier member 30 and first flexible film carrier 16 on opposing sides thereof. Planar layer members 42 and 44 are generally formed of a plastic composition material. Plastic layer members 42 and 44 are applied above and beneath the combination of flexible film carrier 16 and substrate carrier 30 and are generally bonded thereto by appropriate heat and pressure techniques well known in the art.

As has been stated, substrate carrier member 30 may be formed of a ceramic, glass, silicon oxide composition, or Kovar, which is generally a steel carrier having a porcelain coating. Dependent upon the other material composition of card system 10, substrate carrier member 30 is generally designed to be formed of a material which is substantially matched to the temperature coefficient of expansion/contraction of chip devices 14 which may be generally silicon based.

First substrate electrical pattern 40 formed by electrically connecting or lead members 32 interconnect the plurality of attached flexible film carrier member systems in order that a plurality of circuit chip devices 14 may be system integrated. Each of the carriers may then be interconnected together in a unique format dependent upon the logic systems involved to provide an overall electronic system.

Thus, as has been stated, an important purpose and objective of substrate carrier member 30 is to provide a basis for interconnecting the plurality of system level carriers and circuits into an overall operating circuit. Additionally, substrate carrier member 30 mechanically supports the circuits and further dissipates the heat generated by each of chip devices 14 when in an operational mode.

In overall operation in manufacturing data processing card system 10, a plurality of chip circuit devices 14 may be mounted to first flexible film carrier 16 in a manner clearly shown and described in U.S. Patents #3,689,991 and/or #4,380,042. Electrical pattern 40 may be formed through photo-resistive etching on substrate carrier member 30 in a manner well known in the art. First flexible film carrier 16 may then be bonded to substrate carrier member 30 in a registered manner by adhesive bonding. It is to be understood that the adhesive used in such a bonding process has a temperature coefficient of expansion/contraction which substantially matches the composition material of circuit chip devices 14 as well as the particular material composition of substrate carrier member 30. In this manner, first flexible film carrier 16 is adhesively mounted in secured manner to substrate carrier member 30 which in itself is generally and substantially non-electrically conductive, however, is substantially thermally conductive for the dissipation of heat generated by circuit chips 14 during their operational mode. Heat and pressure are applied to weld the appropriate patterns carried on flexible film carrier 16 to attachment points on the matrix or first substrate electrical pattern 40 formed on substrate member 30. Finally, plastic layers 42 and 44 are applied above and beneath the combination of first flexible film carrier 16 and substrate carrier member 30 and such layers 42 and 44 are bonded thereto by appropriate heat and pressure techniques well known in the art.

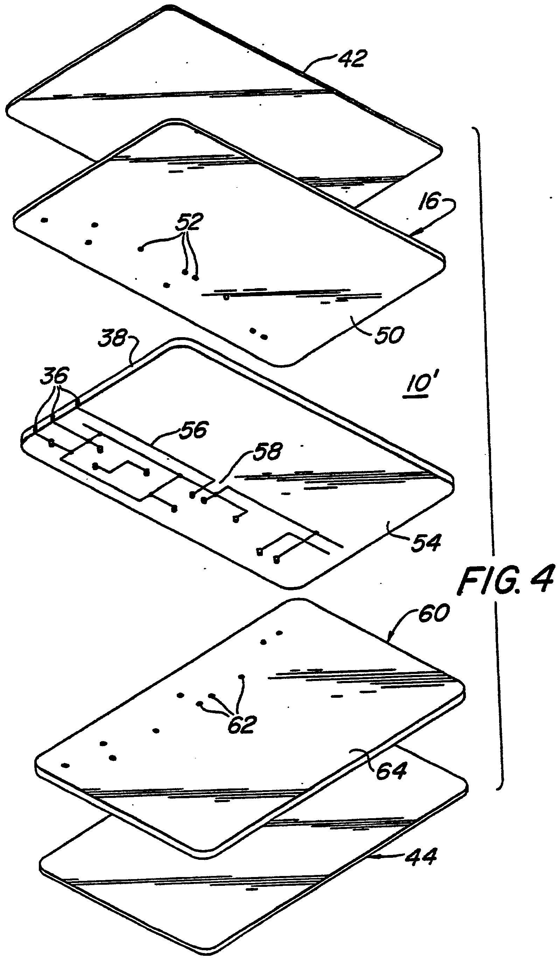

Referring now to FIGS. 4 and 5, there is shown data processing card system 10' which is an embodiment of data processing card system 10 previously described in FIGS. 1-3. For clarity, elements of card system 10' which are substantially the same as elements provided for card system 10, are given like numbers. The concept of data processing card system 10' is to provide a layered system which is utilized for providing additional circuit chip devices 14 with increased logic circuitry while simultaneously maintaining a relatively thin overall housing structure.

As was the case in data processing card system 10, embodiment data processing card system 10' includes first flexible film carrier member 16 which interfaces and is contiguously located with respect to substrate carrier top surface 34. As seen in FIG. 4, first flexible film carrier 16 includes first flexible film carrier lower surface 50 through which there is shown connective openings 52 for coupling of circuit chip devices 14 to first substrate electrical pattern 40 (shown in FIG. 2). It is to be understood that substrate carrier top surface 34 shown in FIG. 2 and 4 contains first substrate electrical pattern 40 which has been described in connection with data processing card system 10 as shown in FIGS. 1-3.

As shown in FIG. 4, substrate carrier member 30 includes substrate carrier member lower surface 54 which has formed thereon lower surface electrical leads 56 formed into second substrate electrical pattern 58 in a manner similar to that provided for data processing card system 10 as previously described. Lower surface leads 56 of second substrate electrical pattern 58 extend to substrate carrier edge face 38 and terminate in electrically connective pin member 36 for electrical coupling to external devices.

Second flexible film carrier 60 carrying and having mounted thereon a plurality of circuit chip devices 14 as shown in FIG. 5 is mated to substrate carrier lower surface 54. Second flexible film carrier 60 includes connective openings 62 for interfacing and connecting circuit chips 14 to second substrate electrical pattern 58. Upper surface 64 of second flexible film carrier member 60 is matingly engaged with substrate carrier lower surface 54 in the substantially identical manner that first flexible film carrier lower surface 50 is matingly engaged with substrate carrier top surface 34. It is to be understood that electrical coupling of circuit devices 14 on first film carrier member 16 may be electrically coupled to circuit devices 14 on second flexible film carrier 60 through interconnection openings or other connectable means passing through substrate carrier member 30.

Thus, first and second electrical patterns 40 and 58 may be formed on opposing surfaces 34 and 54 of substrate carrier member 30 to provide a dual sided interconnect system. In this manner, a plurality of flexible film carrier members such as 16 and 60 may be seen to be mounted on opposing surfaces of substrate carrier member 30 to provide increased design logic considerations for data processing card system 10'.

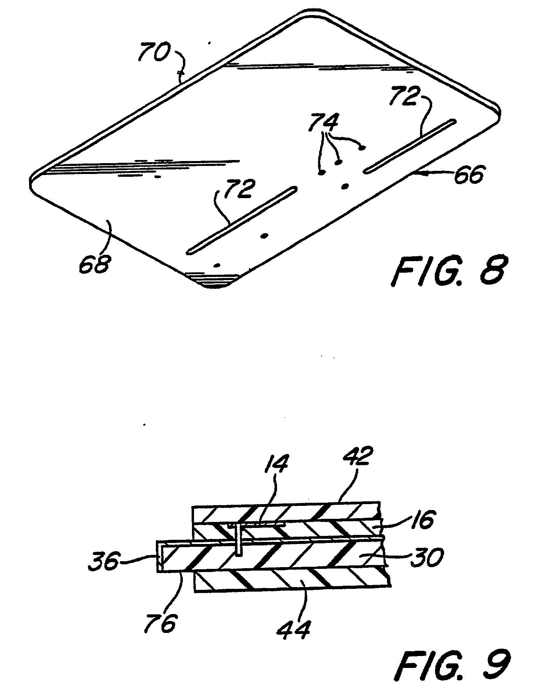

Referring now to FIG. 8, there is shown a mechanism for electrically coupling at least a pair of circuit chip devices 14 each to the other between a predetermined contact area 26. As will be seen in following paragraphs, the chip electrical coupling mechanism is sandwiched between substrate carrier member 30 and first and second flexible carrier members 16 and 60. The electrical coupling mechanism shown in FIG. 8 may be utilized where the diminished area and distances between circuit chips 14 do not permit all of the necessary electrical contacts being completed.

In the case where additional contact and electrical leads are necessitated, there is provided chip coupling flexible carrier member 66 for electrically coupling predetermined contact regions 26 of separate circuit chips 14 each to the other. As was the case with first and second flexible carrier members 16 and 60, chip coupling flexible carrier member 66 includes an electrically insulating tape member having opposed first and second surfaces 68 and 70. Chip coupling carrier member 66 further includes a plurality of electrically conductive chip coupling lead members 72 which are secured to first surface 68 of the electrically insulating tape member. Chip coupling lead members 72 may be generally of the same foil layer construction as that provided and described for electrically conductive foil layer 20 and leads 24 of first carrier member 16.

First surface 68 of chip coupling flexible carrier member 66 is mounted adjacent to surface 50 of first flexible carrier member 16 and/or adjacent surface 64 of second carrier member 60. Pin members passing through opening 62 and/or 52 of associated carriers 60 and 16 contact chip coupling lead members 72 and such pin members may be connected to a predetermined electrical lead 24 to provide electrical coupling between individual circuit chips 14. Thus, in the embodiment shown in FIGS. 1-3, chip coupling flexible carrier member 66 would be sandwiched between first flexible film carrier member 16 and substrate carrier member 30. In the embodiments shown in FIGS. 4 and 5, data processing card system 10' would include a pair of chip coupling flexible carrier members 66 sandwiched between first flexible carrier member 16 and substrate planar member 30 as well as second flexible carrier member 60 and substrate planar member 30 respectively. In order to provide coupling between chip devices 14 on carrier members 16 and 60 and associated portions of first and second substrate electrical patterns 40 and 58, chip coupling openings 74 may be provided to allow other lead pin members to extend therethrough.

Referring now to FIG. 9, there is shown an embodiment of data processing card system 10 as provided in FIGS. 1-3. It is to be understood that the embodiment shown in FIG. 9 is equally applicable to data processing card system 10' as it is to card system 10. In the cross-section shown in FIG. 9, substrate carrier member 30 is seen to be extended beyond the peripheral boundaries of upper and lower plastic layers of 42 and 44 as well as beyond first flexible film carrier member 16. As can be understood, substrate carrier member 30 provides for additional surface area 76 to aid in any additional heat dissipation which may be necessitated. As was the calculation of substrate carrier surface edge thickness 38, additional surface areas 76 may be calculated based upon the heat dissipation requirements necessitated by the particular heat generating logic circuitry contained within card system 10 or card system 10'.

**Claims**

1. A data processing system in the form of a laminated card comprising a laminated support structure sealed between two outer surface layers (42, 44) and supporting therebetween one or more circuit chip device(s) (14) and at least one predetermined electrical lead pattern (40) in spaced relation one above the other and coupled electrically one to the other, said laminated support structure comprising a thermally conductive carrier layer (30) upon which is superimposed a support layer (16) of electrically insulating material and upon which are mounted said one or more circuit chip device(s) (14), characterised in that the laminated support structure (16, 30) comprises, as said thermally conductive carrier layer (30), a layer of rigid electrically insulating, thermally conductive material carrying on its surface said at least one predetermined lead pattern (40), and, as said support layer (16), a flexible film of electrically insulating material upon which are mounted said circuit chip devices (14) in spaced relation to the lead pattern(s) (40) on the carrier layer (30) and which are electrically coupled one to the other across the interface between the rigid carrier and superimposed flexible support layers (30 and 16 respectively).

2. A data processing system according to claim 1, which comprises a set of circuit chip devices (14) mounted on said support layer (16) and electrically connected to the lead pattern (40) on the carrier layer (30), at least one of said circuit chip devices comprising an electrically erasable programmable read only memory device, and wherein said lead pattern comprises at least one input terminal (36) exposed at the edge (38) of the card.

3. A data processing system according to claim 1 or 2, which comprises a second flexible film support layer (60) upon which is mounted a second circuit chip device (14), or a second set of such devices, said first and second support layers (16 and 60) being located in the laminated card on opposite sides of, and in contact with the opposite faces of the rigid carrier layer (54), said carrier layer carrying a second lead pattern (56) on the opposite face thereof with respect to the first lead pattern (40), said second circuit device, or set of devices being electrically connected to said second lead pattern (56).

4. A data processing system according to claim 1, 2 or 3, wherein the edges (38) of the thermally conductive rigid carrier layer (34) are exposed at the edges of the card to assist in the dissipation of heat from the data processing system.

5. A data processing system according to any one of claims 1-4, wherein the lead patterns (40, 56) is or are photo-etched onto the carrier layer (30).

6. A data processing system according to any one of claims 1-5, wherein the thermally conducting, rigid carrier layer (30) is formed from a ceramic, glass, silicon oxide or porcelain coated steel.

7. A data processing system according to any one of claims 1-6, wherein the circuit chip device(s) (14) is or are mounted within apertures (22) formed in said flexible film support layer (16 or 60) and are electrically connected to the lead patterns (40 or 56) via electrical leads (24) bonded to the surface of said support layer (16 or 60) and projecting into said aperture (22) for connection to the respective circuit chip device (14) located therein.

8. A data processing system according to claim 7, wherein said electrical leads (24) are located on that surface of the flexible film support layer (16 or 60) that is opposite to the surface which contacts the rigid carrier layer (34, 54), said electrical leads (24) being electrically connected to the lead patterns (40, 56) on said support layer by electrically conductive members (48) passing through the flexible film layer (16 or 60).

9. A data processing system according to claim 7 or 8, wherein said electrical leads (24) are formed from an electrically conductive film (20) bonded to the surface of the electrically insulating flexible film support layer (16 or 60) and etching away the electrically conductive film (20) in selected regions, thereby leaving behind selected regions of said film (20) to act as said electrical leads (24).

10. A data processing system according to any one of claims 1-9, comprising at least two circuit chip devices (14) mounted on said flexible film support layer (16 or 60) and electrically connected together.

11. A data processing system according to claim 10, wherein said circuit chip devices are electrically interconnected by at least one electrically conductive buss (28) on the surface of the support layer (16 or 60) that is directed away from the underlying rigid carrier layer (34, 54).

12. A data processing system according to claim 10, wherein said circuit chip devices (14) are electrically connected by chip electrical coupling means (72) sandwiched between the flexible film support layer (16, 60, 66) and the underlying rigid carrier layer (34, 54).

13. A method of forming a data processing system comprising at least one circuit chip device electrically connected to a lead pattern and mounted on a solid carrier, with the following steps

a) mounting at least one circuit chip device on a flexible film support layer (16);

b) forming a lead pattern (40) on the surface of a substantially rigid, electrically insulating thermally conductive thin planar carrier layer (34);

c) superimposing the film support layer (16) comprising said circuit chip device(s) (14) onto the carrier layer, and forming the necessary electrical connection(s) between the circuit chip device(s) (14) on the film support layer (16) and the lead pattern (40) on the rigid carrier layer (34);

d) and hermetically sealing the superimposed film support layer (16) and rigid carrier layer (34) between the two outer laminating layers (42, 44), thereby to form a laminated card-like data processing system with said circuit chip devices and the associated lead pattern sealed between the laminations of the card.

14. A method according to claim 13, which comprises mounting at least one further circuit chip device (14) or set of devices on a second flexible film support layer (60), and forming a second lead pattern (56) on the opposite face of the rigid carrier layer (34) to that carrying the first lead pattern, said rigid carrier layer then being sandwiched between the two flexible film support layers (16, 60), with electrical connections being formed between the circuit chip device(s) (14) on the second film layer (60) and said second lead pattern (56), as well as between the circuit chip device(s) (14) on the first flexible film layer (16) and the first lead pattern (40).

15. A method according to claim 13 or 14, wherein said lead pattern(s) (40, 56) is or are photo-etched onto said rigid carrier layer (34, 54).

16. A method according to claim 13, 14 or 15, wherein the flexible film support layer(s) (16, 60) is or are in the form of a thin flexible layer (18) of electrically insulating material having an electrically conductive film (20) bonded to one surface thereof, and wherein the circuit chip device(s) (14) is or are mounted on said film(s) by forming an aperture (22) in said insulating layer to accommodate the circuit chip device to be mounted thereon, selectively etching away said electrically conductive film (20) to leave a plurality of connecting leads (24) bonded to the underlying insulating layer (18) and projecting into said aperture (22) and electrically connecting said projecting leads to the circuit chip device (14) positioned in said aperture.

**Patentansprüche**

1. Datenverarbeitungssystem in Form einer mehrschichtigen Karte mit einem geschichteten Trägeraufbau, welcher abgedichtet zwischen zwei äußeren Oberflächenschichten (42, 44) liegt und dazwischen einen oder mehrere Schaltkreis-Chipeinrichtung(en) (14) sowie im Abstand hierzu zumindest eine vorbestimmte elektrische Leiterstruktur (40) trägt, wobei das eine über dem anderen angeordnet und elektrisch mit dem anderen verbunden ist, wobei der geschichtete Trägeraufbau eine wärmeleitfähige Trägerschicht (30) aufweist, welcher eine Auflageschicht (16) aus einem elektrisch isolierenden Material überlagert ist und auf welcher die einen oder mehreren Schaltkreis-Chipeinrichtung(en) (14) montiert sind, dadurch gekennzeichnet, daß der geschichtete Trägeraufbau (16, 30) als wärmeleitfähige Trägerschicht (30) eine Schicht aus einem starren elektrisch isolierenden, wärmeleitfähigen Material aufweist, welches auf seiner Oberfläche die zumindest eine vorbestimmte Leiterstruktur (40) trägt, und als Auflageschicht (16) einen flexiblen Film aus einem elektrisch isolierenden Material aufweist, auf welchem die Schaltkreis-Chipeinrichtungen (14) beabstandet zu der (den) Leiterstruktur(en) (40) auf der Trägerschicht (30) angebracht sind, welche über die Übergangsfläche zwischen der festen Trägerschicht und der überlagerten flexiblen Auflageschicht (30 bzw. 16) hinweg elektrisch miteinander verbunden sind.

2. Datenverarbeitungssystem nach Anspruch 1, welches einen Satz von Schaltkreis-Chipeinrichtungen (14) aufweist, die auf der Auflageschicht (16) montiert und elektrisch mit der Leiterstruktur (40) auf der Trägerschicht (30) verbunden sind, wobei zumindest eine der Schaltkreis-Chipeinrichtungen eine elektrisch löschbare programmierbare Nur-Lese-Speichereinrichtung (ROM, read only memory) aufweist, und wobei die Leiterstruktur zumindest einen Eingangsanschluß (36) aufweist, welcher an der Kante (38) der Karte offenliegt.

3. Datenverarbeitungssystem nach Anspruch 1 oder 2, welches eine zweite flexible Filmauflageschicht (60) aufweist, auf welcher eine zweite Schaltkreis-Chipeinrichtung (14) oder ein zweiter Satz derartiger Einrichtungen befestigt ist, wobei die erste und die zweite Auflageschicht (16 und 60) in der mehrschichtigen Karte auf gegenüberliegenden Seiten und in Berührung mit den gegenüberliegenden Flächen der starren Trägerschicht (54) angeordnet sind, wobei die Trägerschicht eine zweite Leiterstruktur (56) auf ihrer der ersten Leiterstruktur (40) gegenüberliegenden Seite trägt und wobei die zweite Schaltkreis-Chipeinrichtung oder der Satz von Einrichtungen elektrisch mit der zweiten Leiterstruktur (56) verbunden ist.

4. Datenverarbeitungssystem nach Anspruch 1, 2 oder 3, wobei die Kanten (38) der wärmeleitfähigen starren Trägerschicht (34) an den Kanten der Karte offenliegen, um die Abfuhr von Wärme aus dem Datenverarbeitungssystem zu unterstützen.

5. Datenverarbeitungssystem nach einem der Ansprüche 1 bis 4, wobei die Leiterstruktur(en) (40, 56) mit Fotoätztechnik auf der Trägerschicht (30) angebracht ist (sind).

6. Datenverarbeitungssystem nach einem der Ansprüche 1 bis 5, wobei die wärmeleitfähige, starre Trägerschicht (30) aus Keramik, Glas, Siliciumoxid oder mit Porzellan beschichtetem Stahl gebildet ist.

7. Datenverarbeitungssystem nach einem der Ansprüche 1 bis 6, wobei die Schaltkreis-Chipeinrichtung(en) (14) in Öffnungen (22), welche in der flexiblen Filmauflageschicht (16 oder 60) gebildet sind, befestigt und mit den Leiterstrukturen (40 oder 56) über elektrische Leitungen (24) elektrisch verbunden ist bzw. sind, welche auf die Auflageschicht (16 oder 60) aufgeklebt oder an dieser befestigt sind und in die Öffnungen (22) für den Anschluß an die darin angeordnete Schaltkreis-Chipeinrichtung (14) hineinragen.

8. Datenverarbeitungssystem nach Anspruch 7, wobei die elektrischen Leitungen (24) auf der Oberfläche der flexiblen Filmauflageschicht (16 oder 60) angeordnet sind, welche der Oberfläche, die mit der starren Trägerschicht (34, 54) in Berührung tritt, gegenüberliegt, wobei die elektrischen Leitungen (24) elektrisch mit der Leiterstruktur (40, 56) auf der Auflageschicht durch elektrisch leitfähige Teile (48) verbunden ist, welche durch die flexible Filmschicht (16 oder 60) hindurchgehen.

9. Datenverarbeitungssystem nach Anspruch 7 oder 8, wobei die elektrischen Leitungen (24) aus einem elektrisch leitfähigen Film (20) gebildet sind, welcher auf die Oberfläche der elektrisch isolierenden flexiblen Filmauflageschicht (16 oder 60) aufgeklebt bzw. aufgebracht ist, wobei der elektrisch leitfähige Film (60) in ausgewählten Bereichen weggeätzt wird und dadurch ausgewählte Bereiche des Filmes (20) zurückläßt, damit diese als elektrische Leitungen (24) wirken.

10. Datenverarbeitungssystem nach einem der Ansprüche 1 bis 9, mit zumindest zwei Schaltkreis-Chipeinrichtungen (14), welche auf der flexiblen Filmauflageschicht (16 oder 60) befestigt sind und elektrisch miteinander verbunden sind.

11. Datenverarbeitungssystem nach Anspruch 10, wobei die Schaltkreis-Chipeinrichtungen über zumindest eine elektrisch leitfähige Übertragungsleitung (28) auf der Oberfläche der Auflageschicht (16 oder 60) verbunden sind, welche der darunterliegenden starren Trägerschicht (34, 54) abgewandt ist.

12. Datenverarbeitungssystem nach Anspruch 10, wobei die Schaltkreis-Chipeinrichtungen (14) über elektrische Chipkopplungseinrichtungen (22) elektrisch miteinander verbunden sind, welche sandwichartig zwischen der flexiblen Filmauflageschicht (16, 60, 66) und der darunterliegenden starren Trägerschicht (34, 54) angeordnet sind.

13. Verfahren zum Ausbilden eines Datenverarbeitungssystems mit zumindest einer Schaltkreis-Chipeinrichtung, welche elektrisch an eine Leiterstruktur angeschlossen und auf einem festen Träger befestigt ist, mit den folgenden Schritten
   a) Anbringen zumindest einer Schaltkreis-Chipeinrichtung auf einer flexiblen Filmauflageschicht (16);
   b) Ausbilden einer Leiterstruktur (40) auf der Oberfläche einer im wesentlichen starren, elektrisch isolierenden, wärmeleitfähigen, dünnen, ebenen Trägerschicht (34);
   c) Aufbringen der Filmauflageschicht (16), welche die Schaltkreis-Chipeinrichtung(en) (14) aufweist, auf die Trägerschicht und Herstellen der elektrischen Verbindungen zwischen der (den) Schaltkreis-Chipeinrichtung(en) (14) auf der Filmauflageschicht (16) und der Leiterstruktur (40) auf der starren Trägerschicht (34); und
   d) hermetisches Abdichten der überlagerten Filmauflageschicht (16) und der starren Trägerschicht (34) zwischen zwei äußeren Kaschierungsschichten (42, 44), um dadurch ein mehrschichtiges, kartenartiges Datenverarbeitungssystem mit den Schaltkreis-Chipeinrichtungen und der zugehörigen Leiterstruktur zu bilden, welche zwischen den Schichtungen der Karte versiegelt sind.

14. Verfahren nach Anspruch 13 mit: Befestigen zumindest einer weiteren Schaltkreis-Chipeinrichtung (14) oder eines Satzes von Einrichtungen auf einer zweiten flexiblen Filmauflageschicht (60) und Ausbilden einer zweiten Leiterstruktur (56) auf der gegenüberliegenden Seite der die erste Leiterstruktur tragenden Seite der starren Trägerschicht (34), wobei die starre Trägerschicht dann zwischen zwei flexiblen Filmauflageschichten (16, 60) sandwichartig angeordnet wird, wobei elektrische Verbindungen zwischen der (den) Schaltkreis-Chipeinrichtung(en) (14) auf der zweiten Filmschicht (60) und der zweiten Leiterstruktur (56) gebildet werden, ebenso wie zwischen der (den) Schaltkreis-Chipeinrichtung(en) (14) auf der ersten flexiblen Filmschicht (16) und der ersten Leiterstruktur (40).

15. Verfahren nach Anspruch 13 oder 14, wobei die Leiterstruktur(en) (40, 56) in Fotoätztechnik auf der festen Trägerschicht (34, 54) ausgebildet ist bzw. sind.

16. Verfahren nach Anspruch 13, 14 oder 15, wobei die flexible Filmauflageschicht(en) (16, 60) in Form einer dünnen flexiblen Schicht (18) aus einem elektrisch isolierenden Material besteht bzw. bestehen, auf deren einer Oberfläche ein elektrisch leitfähiger Film (20) aufgeklebt ist, und wobei die Schaltkreis-Chipeinrichtung(en) (14) auf dem (den) Film(en) befestigt ist bzw. sind, indem eine Öffnung (22) in der isolierenden Schicht ausgebildet wird, welche die daran zu befestigende Schaltkreis-Chipeinrichtung aufnimmt, wobei gezielt der elektrisch leitfähige Film (20) derart abgeätzt wird, daß er eine Mehrzahl von Verbindungsleitungen (24) hinterläßt, welche an die darunterliegende isolierende Schicht (18) geklebt sind und in die Öffnung (22) hineinragen und wobei die hineinragenden Leitungen mit der Schaltkreis-Chipeinrichtung (14) elektrisch verbunden werden, welche in der Öffnung angeordnet ist.

## Revendications

1. Système de traitement de données sous forme de carte stratifiée comprenant une structure de support stratifiée scellée entre deux couches superficielles externes (42, 44) et supportant entre elles un ou plusieurs dispositifs de circuit à puce (14) et au moins une configuration de conducteurs électriques prédéterminée (40) espacés les uns au-dessus des autres et couplés électriquement les uns aux autres, ladite structure de support stratifiée comprenant une couche porteuse thermiquement conductrice (30) sur laquelle est superposée une couche de support (16) réalisée en une matière électriquement isolante et sur laquelle sont montés ledit ou lesdits dispositifs de circuit à puce (14), caractérisé en ce que la structure de support stratifiée (16, 30) comprend, en tant que couche thermiquement conductrice (30), une couche rigide réalisée en une matière thermiquement conductrice électriquement isolante portant sur sa surface ladite configuration de conducteurs prédéterminée au nombre d'au moins une (40) et, en tant que couche de support (16), une pellicule flexible réalisée en une matière électriquement isolante sur laquelle sont montés lesdits dispositifs de circuit à puce (14) espacés par rapport à la (aux) configuration(s) de conducteurs (40) sur la couche porteuse (30), lesdits dispositifs et configurations étant couplés électriquement les uns aux autres à travers l'interface située entre la couche porteuse rigide et la couche de support flexible superposée (30 et 16 respectivement).

2. Système de traitement de données selon la revendication 1 comprenant un ensemble de dispositifs de circuit à puce (14) monté sur ladite couche de support (16) et électriquement relié à la configuration de conducteurs (40) située sur la couche porteuse (30), au moins l'un desdits dispositifs de circuit à puce comportant un dispositif à mémoire morte programmable électriquement effaçable, et dans lequel ladite configuration de conducteurs comprend au moins une borne d'entrée (36) exposée sur le bord (38) de la carte.

3. Système de traitement de données selon la revendication 1 ou la revendication 2 comprenant une seconde couche de support réalisée en une pellicule flexible (60) sur laquelle est monté un second dispositif de circuit à puce (14), ou un second ensemble de tels dispositifs, lesdites première et seconde couches de support (16 et 60) étant situées dans la carte stratifiée de part et d'autre de la couche porteuse rigide (54) et en contact avec les faces opposées de celle-ci, ladite couche porteuse portant une seconde configuration de conducteurs (56) sur sa face opposée par rapport à ladite première configuration de conducteurs (40), ledit second dispositif de circuit, ou ensemble de dispositifs, étant électriquement relié(s) à ladite seconde configuration de conducteurs (56).

4. Système de traitement de données selon la revendication 1, 2 ou 3 dans lequel les bords (38) de la couche porteuse rigide thermiquement conductrice (34) sont exposés sur les bords de la carte afin de favoriser la dissipation de chaleur en provenance du système de traitement de données.

5. Système de traitement de données selon l'une quelconque des revendications 1 à 4, dans lequel la (les) configuration(s) de conducteurs (40, 56) est (sont) réalisée(s) sur la couche porteuse (30) par photo-incision.

6. Système de traitement de données selon l'une quelconque des revendications 1 à 5 dans lequel la couche porteuse rigide thermiquement conductrice (30) est réalisée à partir d'une céramique, de verre, d'oxyde de silicium ou d'acier revêtu de porcelaine.

7. Système de traitement de données selon l'une quelconque des revendications 1 à 6 dans lequel le(s) dispositif(s) de circuit à puce (14) est (sont) monté(s) à l'intérieur d'ouvertures (22) formées dans ladite couche de support en pellicule flexible (16 ou 60) et est (sont) relié(s) électriquement aux configurations de conducteurs (40 ou 56) par l'intermédiaire de conducteurs électriques (24) collés à la surface de ladite couche de support (16 ou 60) et faisant saillie dans ladite ouverture (22) pour être reliés au dispositif de circuit à puce correspondant (14) qui est situé dans ladite ouverture.

8. Système de traitement de données selon la revendication 7 dans lequel lesdits conducteurs électriques (24) sont situés sur la surface de la couche de support en pellicule flexible (16 ou 60) qui est opposée à la surface qui est en contact avec la couche porteuse rigide (34, 54), lesdits conducteurs électriques (24) étant électriquement reliés aux configurations de conducteurs (40, 56) sur ladite couche de support par des éléments électriquement conducteurs (48) passant à travers la couche en pellicule flexible (16 ou 60).

9. Système de traitement de données selon la revendication 7 ou la revedication 8 dans lequel les conducteurs électriques (24) sont formés à partir d'une pellicule électriquement conductrice (20) collée à la surface de la couche de support en pellicule flexible électriquement isolante (16 ou 60), en attaquant des zones sélectionnées de la pellicule électriquement conductrice (20) pour les éliminer, laissant ainsi subsister des zones sélectionnées de ladite pellicule (20) devant servir de conducteurs électriques (24).

10. Système de traitement de données selon l'une quelconque des revendications 1 à 9 comportant au moins deux dispositifs de circuit à puce (14) montés sur ladite couche de support en pellicule flexible (16 ou 60) et reliés électriquement ensemble.

11. Système de traitement de données selon la revendication 10, dans lequel lesdits dispositifs de circuit à puce sont reliés électriquement entre eux par l'intermédiaire d'au moins une barre omnibus électriquement conductrice (28) sur la surface de la couche de support (16 ou 60) qui est tournée dans la direction opposée à la couche porteuse rigide sous-jacente (34, 54).

12. Système de traitement de données selon la revendication 10 dans lequel lesdits dispositifs de circuit à puce (14) sont électriquement reliés par des moyens de couplage électrique de puces (72) pris en sandwich entre la couche de support en pellicule flexible (16, 60, 66) et la couche porteuse rigide sous-jacente (34, 54).

13. Méthode de formation d'un système de traitement de données comprenant au moins un dispositif de circuit à puce électriquement relié à une configuration de conducteurs et monté sur un moyen porteur solide comportant les étapes suivantes:

a) le montage d'au moins un dispositif de circuit à puce sur une couche de support en pellicule flexible (16);

b) la formation d'une configuration de conducteurs (40) sur la surface d'une couche porteuse (34) planaire mince essentiellement rigide, thermiquement conductrice et électriquement isolante;

c) la superposition de la couche de support en pellicule flexible (16) comportant le (les) dispositif(s) de circuit à puce (14) sur la couche porteuse et la formation du (des) raccordements électriques nécessaires entre le (les) dispositifs de circuit à puce (14) sur la couche de support en pellicule flexible (16) et la configuration de conducteurs (40) sur la couche porteuse rigide (34);

d) et le scellement hermétique de la couche de support en pellicule flexible superposée (16) et la couche porteuse rigide (34) entre les deux couches de stratification externes (42, 44) pour former ainsi un système de traitement de données sous forme de carte stratifiée, lesdits dispositifs de circuit à puce et la configuration de conducteurs associée étant scellés entre les couches de stratification de la carte.

14. Méthode selon la revendication 13 comprenant le montage d'au moins un autre dispositif de circuit à puce (14) ou un autre ensemble de dispositifs de circuit à puce sur une seconde couche de support en pellicule flexible (60) et la formation d'une seconde configuration de conducteurs (56) sur la face de la couche porteuse rigide (34) opposée à celle qui porte la première configuration de conducteurs, ladite couche porteuse rigide étant ensuite prise en sandwich entre les deux couches de support en pellicule flexible (16, 60), des raccordements électriques étant formés entre le (les) dispositif(s) de circuit à puce (14) sur la seconde couche en pellicule flexible (60) et ladite seconde configuration de conducteurs (56), ainsi qu'entre le (les) dispositif(s) de circuit à puce (14) sur la première couche en pellicule flexible (16) et la première configuration de conducteurs (40).

15. Méthode selon la revendication 13 ou la revendication 14 dans laquelle ladite (lesdites) configuration(s) de conducteurs (40, 56) est (sont) formée(s) sur ladite couche porteuse rigide (34, 54) par photo-incision.

16. Méthode selon les revendications 13, 14 ou 15, dans laquelle la (les) couche(s) en pellicule flexible (16, 60) se présente(nt) sous la forme d'une couche flexible mince (18) réalisée en une matière électriquement isolante à l'une des surfaces de laquelle est collée une pellicule électriquement conductrice (20), et dans laquelle le (les) dispositifs de circuit à puce (14) est (sont) monté(s) sur ladite (lesdites) pellicule(s) en formant une ouverture (22) dans ladite couche isolante pour loger le dispositif de circuit à puce destiné à être monté sur celle-ci, en supprimant une partie de ladite pellicule électriquement conductrice (20) par attaque sélective de manière à laisser subsister une pluralité de conducteurs de raccordement (24) collés à la couche isolante sous-jacente (18) et faisant saillie dans ladite ouverture (22) et en reliant électriquement lesdits conducteurs en saillie au dispositif de circuit à puce (14) mis en place dans ladite ouverture.

FIG. 1

FIG. 3

FIG. 2

FIG. 4

EP 0 212 020 B1

FIG. 5

FIG. 6

FIG. 7

FIG. 8

FIG. 9